# EUROPEAN PATENT APPLICATION

(11) **EP 3 964 162 A1**
(43) Date of publication of application: **09.03.2022**
(21) Application number: 20917271.7
(22) Date of filing: 31.07.2020
(51) Int. Cl.: A61C 1/08, A61C 5/40

(54) **CURVED HANDPIECE USED FOR DENTAL ROOT CANAL THERAPY**

(30) Priority: 20.07.2020 CN 202010698838; 20.07.2020 CN 202021431332 U
(71) Applicant: Guilin Woodpecker Medical Instrument Co., Ltd., Guilin, Guangxi 541004 (CN)
(72) Inventor: WEI, Kunsong, Guilin, Guangxi 541004 (CN); HUANG, Yongchao, Guilin, Guangxi 541004 (CN); WU, Kunyou, Guilin, Guangxi 541004 (CN)
(74) Representative: Sun, Yiming
(86) International application number: PCT/CN2020/106097
(87) International publication number: WO 2022/016599

(57) **Abstract**

The present invention discloses a curved handpiece for dental root canal treatment. The curved handpiece for dental root canal treatment forms an overall scheme of a dental curved handpiece, which is internally conductive, surface insulated, compact in structure, small in height and size and convenient to repair for the first time in the industry. A dental root canal length measuring function can be realized accurately, safely and stably, and a stable two-in-one function of combining root canal preparation and dental root canal length measurement is further realized. The structure is compact as a whole, and a good visual field is provided. The risk of instrument separation or preparation step generation in the operation process of doctors is reduced, and the safety improvement is greatly guaranteed. According to the scheme, it is convenient to disassemble, repair and clean, the risk of cross infection is reduced, and the use safety and convenience effects of the present invention are further improved. The curved handpiece has great market benefits.

## Description

### TECHNICAL FIELD

The present invention relates to the field of dental medical instruments, and particularly to a curved handpiece for dental root canal treatment.

### BACKGROUND

At present, a variety of internal conductive structures (different from each other) for curved handpieces for dental root canal treatment exist, and a variety of outer-surface insulation schemes also exist. For a rear-cover part of a handpiece head which requires pressing to hold a root canal file, in order to achieve insulation while ensuring a small height, various different structures also exist. In addition, for the overall structure of the dental curved handpiece, under the premise of realizing internal electrical conduction, surface insulation and reduction of the height of the rear cover of the handpiece head (which also requires insulation), the connection and fastening between the components is basically non-detachable. If a thread-plus-glue fastening method is adopted, it is inconvenient to clean after use, or even repairable.

Existing curved handpieces for dental root canal treatment have unstable conductivity during operation, are prone to failure or complex in structure, and are difficult to repair. In some products, the conductive structures are arranged outside, which leads to a bulky size and poor visual field, increasing the risk of instrument separation or preparation step generation in the operation process of doctors, resulting in low operational safety.

### SUMMARY

An objective of the present invention is to provide a curved handpiece for dental root canal treatment, in order to solve the technical problems in the prior art that existing curved handpieces for dental root canal treatment have unstable conductivity during operation, are prone to failure or complex in structure, and are difficult to repair, and that in some products, the conductive structures are arranged outside, which leads to a bulky size and poor visual field, increasing the risk of instrument separation or preparation step generation in the operation process of doctors, resulting in low operational safety.

To achieve the above objective, the curved handpiece for dental root canal treatment adopted in the present invention includes a head and a rear cover device, wherein a surface of the curved handpiece for dental root canal treatment is provided with an insulating coating; the rear cover device is detachably connected to the head and is disposed on one side of the head; the insulating coating is coated on the surface of the curved handpiece for dental root canal treatment; and a material of the insulating coating is alumina or Teflon or ceramic paint or resin or diamond-like carbon.

The curved handpiece for dental root canal treatment further includes a detachable device and an elastic conductive device, wherein the detachable device is detachably connected to the head, and the elastic conductive device is detachably connected to the head and is disposed on one side of the head.

The rear cover device includes a rear-cover bearing holder, a rear-cover button, a spreader ring, a spring and a rear-cover support, wherein the rear-cover bearing holder is fixedly connected to the head and is disposed on one side of the head; the rear-cover button is slidably connected to the rear-cover support, is disposed inside the rear-cover support, and partially protrudes out of the rear-cover support; the spreader ring is fixedly connected to the rear-cover button and is disposed on one side of the rear-cover button; one end of the spring abuts against the rear-cover button and the other end abuts against the rear-cover bearing holder, and the spring is disposed between the rear-cover bearing holder and the rear-cover button; and the rear-cover support is clamped with the rear-cover bearing holder, is slidably connected to the rear-cover button, and is disposed on one side of the rear-cover bearing holder proximate to the rear-cover button.

The detachable device includes a movement, a first-stage transmission shaft, an urging chamfered block, an input gearbox cover, a second-stage transmission shaft and a head tail cover, wherein the movement is rotatably connected to the head and is disposed on one side of the head; the first-stage transmission shaft is fixedly connected to the head, and one end of the first-stage transmission shaft is engaged with the movement for transmission and is disposed inside the head; the urging chamfered block abuts against the first-stage transmission shaft, is sleeved over a periphery of the first-stage transmission shaft, and is disposed at one end of the first-stage transmission shaft distal from the movement; the input gearbox cover abuts against the urging chamfered block, is detachably connected to the head tail cover, and is disposed on one side of the head tail cover distal from the head; the second-stage transmission shaft is rotatably connected to the input gearbox cover, is engaged with the first-stage transmission shaft, and is disposed inside the input gearbox cover; and the head tail cover is detachably connected to the head and is disposed on one side of the head distal from the movement.

The elastic conductive device includes an axle and a conductive elastic piece, wherein the axle is rotatably connected to the movement and is disposed inside the movement, one end of the conductive elastic piece elastically abuts against the axle, and the other end is fixedly connected to the first-stage transmission shaft, and the conductive elastic piece is disposed between the first-stage transmission shaft and the axle.

One or more conductive elastic pieces are provided, each surrounding the entire first-stage transmission shaft.

The rear-cover bearing holder, the rear-cover support, and the rear-cover button are made of an insulating material.

The urging chamfered block has a bevel, wherein the bevel is disposed on one side of the urging chamfered block proximate to the input gearbox cover.

The detachable device further includes a screw, wherein the screw is detachably connected to the head tail cover, is detachably connected to the input gearbox cover, and is disposed between the head tail cover and the input gearbox cover.

The elastic conductive device further includes a limiting clamp, wherein the limiting clamp is fixedly connected to the conductive elastic piece, abuts against the axle, and is disposed on one side of the conductive elastic piece proximate to the axle.

The curved handpiece for dental root canal treatment according to the present invention forms an overall scheme of a dental curved handpiece, which is internally conductive, surface insulated, compact in structure, small in height and size and convenient to repair for the first time in the industry. A dental root canal length measuring function can be realized accurately, safely and stably, and a stable two-in-one function of combining root canal preparation and dental root canal length measurement is further realized. The structure is compact as a whole, and a good visual field is provided. The risk of instrument separation or preparation step generation in the operation process of doctors is reduced, and the safety improvement is greatly guaranteed. According to the scheme, it is convenient to disassemble, repair and clean, the risk of cross infection is reduced, and the use safety and convenience effects of the present invention are further improved. The curved handpiece has great market benefits.

### BRIEF DESCRIPTION OF THE DRAWINGS

In order to more clearly explain the technical solutions in the embodiments of the present invention or in the prior art, the drawings used in the description of the embodiments or the prior art will be briefly described below. Obviously, the drawings depicted below are merely embodiments of the present invention, and those skilled in the art can obtain other drawings based on these drawings without any creative efforts.
FIG. 1 is a schematic structural diagram of an internal conductive path according to the present invention.
FIG. 2 is a schematic structural diagram showing a connection between a first-stage transmission shaft and a second-stage transmission shaft according to the present invention.
FIG. 3 is a schematic structural diagram of an urging chamfered block according to the present invention.
FIG. 4 is a schematic structural diagram of a conductive device according to the present invention.
FIG. 5 is a structural exploded view of a conductive elastic piece of a first shape according to the present invention.
FIG. 6 is a schematic structural diagram showing the connection of the conductive elastic piece of the first shape according to the present invention.
FIG. 7 is a structural exploded view of a conductive elastic piece of a second shape according to the present invention.
FIG. 8 is a schematic structural diagram showing the connection of the conductive elastic piece of the second shape according to the present invention.
FIG. 9 is a schematic structural diagram of a rear cover device according to the present invention.
In the figures: 1 - root canal file, 2 - head, 3 - insulation device, 4 - detachable device, 31 - movement, 32 - first-stage transmission shaft, 33 - urging chamfered block, 34 - head tail cover, 35 - input gearbox cover, 36 - second-stage transmission shaft, 37 - elastic conductive device, 38 - rear cover device, 39 - screw, 40 - insulating coating, 100 - curved handpiece for dental root canal treatment, 331 - bevel, 371 - axle, 372 - conductive elastic piece, 373 - limiting clamp, 381 - rear-cover bearing holder, 382 - rear-cover support, 383 - rear-cover button, 384 - spreader ring, 385 - spring, and 3831 - groove.

### DETAILED DESCRIPTION

Embodiments of the present invention will be described in detail hereinafter. Example of the embodiments are shown in the accompanying drawings in which the same or like reference characters refer to the same or like elements or elements having the same or like functions throughout. The embodiments described below with reference to accompanying drawings are exemplary, intended to explain the present invention, and shall not be understood as a limitation to the present invention.

In the description of the present invention, it should be understood that the orientations or positional relationships indicated by the terms "length", "width", "upper", "lower", "front", "rear", "left", "right", "vertical", "horizontal", "top", "bottom", "inner", "outer", etc. are based on the orientations or positional relationships shown in the drawings, and are only for the convenience of describing the present invention and simplifying the description, rather than indicating or implying that the device or element described must have a specific orientation or be constructed and operated in a specific orientation, and therefore are not to be construed as limiting the present invention. Moreover, in the description of the present invention, "a plurality of" means two or more, unless it is defined otherwise specifically.

### First embodiment

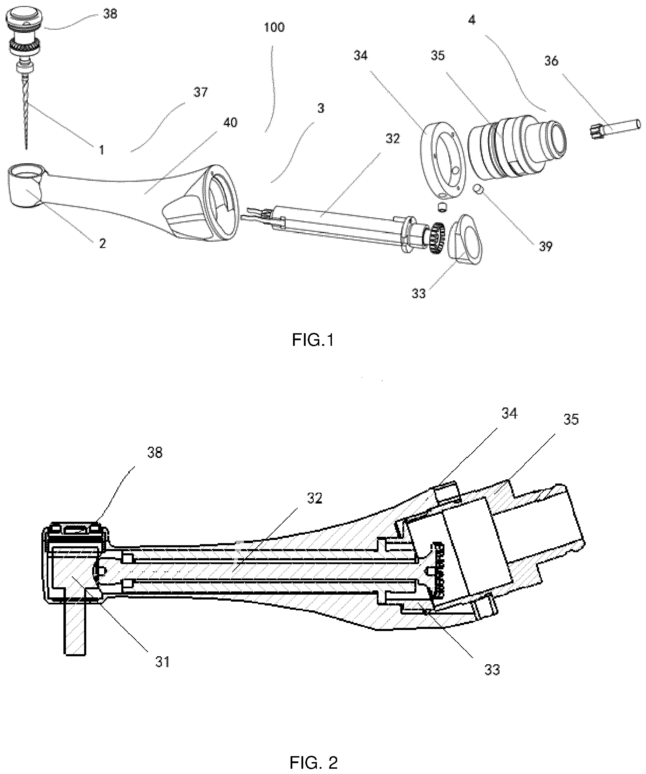

Referring to FIGS. 1 to 9, the present invention provides a curved handpiece for dental root canal treatment 100. The curved handpiece for dental root canal treatment 100 includes a head 2 and a rear cover device 38. A surface of the curved handpiece for dental root canal treatment 100 is provided with an insulating coating 40. The rear cover device 38 is detachably connected to the head 2 and is disposed on one side of the head 2. The insulating coating 40 is coated on the surface of the curved handpiece for dental root canal treatment 100. A material of the insulating coating 40 is alumina or Teflon or ceramic paint or resin or diamond-like carbon (DLC).

Further, the curved handpiece for dental root canal treatment 100 further includes a detachable device 4 and an elastic conductive device 37. The detachable device 4 is detachably connected to the head 2. The elastic conductive device 37 is detachably connected to the head 2 and is disposed on one side of the head 2.

Further, the rear cover device 38 includes a rear-cover bearing holder 381, a rear-cover button 383, a spreader ring 384, a spring 385 and a rear-cover support 382. The rear-cover bearing holder 381 is fixedly connected to the head 2 and is disposed on one side of the head 2. The rear-cover button 383 is slidably connected to the rear-cover support 382, is disposed inside the rear-cover support 382, and partially protrudes out of the rear-cover support 382. The spreader ring 384 is fixedly connected to the rear-cover button 383 and is disposed one side of the rear-cover button 383. One end of the spring 385 abuts against the rear-cover button 383 and the other end abuts against the rear-cover bearing holder 381. The spring 385 is disposed between the rear-cover bearing holder 381 and the rear-cover button 383. The rear-cover support 382 is clamped with the rear-cover bearing holder 381, is slidably connected to the rear-cover button 383, and is disposed on one side of the rear-cover bearing holder 381 proximate to the rear-cover button 383.

Further, the detachable device 4 includes a movement 31, a first-stage transmission shaft 32, an urging chamfered block 33, an input gearbox cover 35, a second-stage transmission shaft 36 and a head tail cover 34. The movement 31 is rotatably connected to the head 2 and is disposed on one side of the head 2. The first-stage transmission shaft 32 is fixedly connected to the head 2. One end of the first-stage transmission shaft 32 is engaged with the movement 31 for transmission and is disposed inside the head 2. The urging chamfered block 33 abuts against the first-stage transmission shaft 32, is sleeved over a periphery of the first-stage transmission shaft 32, and is disposed at one end of the first-stage transmission shaft 32 distal from the movement 31. The input gearbox cover 35 abuts against the urging chamfered block 33, is detachably connected to the head tail cover 34, and is disposed on one side of the head tail cover 34 distal from of the head 2. The second-stage transmission shaft 36 is rotatably connected to the input gearbox cover 35, is engaged with the first-stage transmission shaft 32, and is disposed inside the input gearbox cover 35. The head tail cover 34 is detachably connected to the head 2 and is disposed on one side of the head 2 distal from the movement 31.

Further, the elastic conductive device 37 includes an axle 371 and a conductive elastic piece 372. The axle 371 is rotatably connected to the movement 31 and is disposed inside the movement 31. One end of the conductive elastic piece 372 elastically abuts against the axle 371, and the other end is fixedly connected to the first-stage transmission shaft 32. The conductive elastic piece 372 is disposed between the first-stage transmission shaft 32 and the axle 371.

In this embodiment, the axle 371 is connected therein with a root canal file 1 which is an expander in a separate root canal instrument. The root canal file 1 is fixed to the axle 371 by a clamping device. The conductive elastic piece 372 is mounted on the first-stage transmission shaft 32. The conductive elastic piece 372 is elastic and tightly clamps the axle 371 with a small elastic deformation and enters into close contact with the axle 371 (similar to an electric brush), such that the circuit from the first-stage transmission shaft 32 to the axle 371 is steadily conducted. During operation, the axle 371 rotates, and the conductive elastic piece 372 tightly clamps the axle 371, in which case the conductive elastic piece 372 is in close contact with the axle 371. Therefore, a circuit conduction path of the elastic conductive device 37 is from the first-stage transmission shaft 32 to the axle 371 through the conductive elastic piece 372. The conductive elastic piece 372 conducted with the axle 371 through direct contact is mounted on the first-stage transmission shaft 32. In this way, the existing structural parts of the product are advantaged without addition of an external conduction circuit, thereby simplifying the structure and ensuring stable conductivity. Because plastic is insulating, the rear-cover bearing holder 381, the rear-cover support 382, and the rear-cover button 383 are made of an insulating material. The spring 385 and the spreader ring 384 are made of a metal material. In practical use, when the spreader ring 384 is pressed, a pin member therein which is engaged with the axle 371 is expanded to release and take out the clamped root canal file 1. Because the spring 385 and the spreader ring 384 are made of a metal material, the wear resistance, surface smoothness, and service life can be improved, and the frictional loss can be reduced. During assembly of the elastic conductive device 37, first, the movement 31 is placed into the head 2; next, the first-stage transmission shaft 32 is inserted into the head 2 from an end with a larger hole, which is then successively sheathed in the urging chamfered block 33, the head tail cover 34, and the input gearbox cover 35. Because the input gearbox cover 35 is provided with outer threads and an inner hole of the head 2 on the corresponding side is provided with inner threads, an end face of the input gearbox cover 35 is pressed against the bevel of the urging chamfered block 33, in order to tightly urge and fix the urging chamfered block 33. The surface of the insulation device 3 (including the head 2, the rear-cover button 383, the rear-cover support 382 and the head tail cover 34) makes use of the insulating (nonconductive) properties of materials such as alumina, Teflon, ceramic paint, resin, and diamond-like materials. The diamond-like material forms a diamond-like carbon (DLC) coating on the surface of the insulation device 3 and forms an insulating protection film on the surface of the housing. The conductive elastic piece 372 includes a connecting portion and an abutting portion, in which the connecting portion is fixedly connected to the abutting portion. The abutting portion abuts against an outer wall of the axle 371, and elastically deforms to tightly press against the axle 371, such that the conductive elastic piece 372 is in stable electrical connection and conduction with the axle 371. The connecting portion is fixedly connected to the first-stage transmission shaft 32. Two conductive elastic pieces 372 symmetrical to each other up and down or left and right may be provided, or a single conductive elastic piece may be provided. Optionally, the rear-cover button 383 and the rear-cover support 382 in the rear cover device 38 may be made of a plastic material to meet the requirements on the insulation device 3, and the spreader ring of the rear cover device 38 is made of a metal material. The combination of plastic and metal materials can not only achieve the insulation effect but can also reduce the height (the metal material is for providing a long durability against pressing and expansion). The spring 385 may be completely concealed in a groove 3831 of the rear-cover button 383, such that the rear-cover button 383 and an end face of the rear-cover bearing holder 381 can be completely adhered to each other without any gap. As such, the circuit formed by the axle 371, the conductive elastic piece 372 and the first-stage transmission shaft 32 is conducted. Therefore, the conductivity is stable during operation of the root canal file 1, the dental root canal length measuring function is accurate, and a stable two-in-one function is realized, in which dental root canal length measurement is performed while performing root canal preparation using a root canal treatment device. In the meantime, the structure is compact, it is convenient to repair, it is internally conductive and smaller than an externally-mounted handpiece head 2, a good visual field is provided during operation, the risk of instrument separation or preparation step generation in the operation process of doctors is reduced, and the safety improvement is greatly guaranteed. Meanwhile, the threaded connection between the input gearbox cover 35 and the head 2 and the use of the urging chamfered block 33 to fix the first-stage transmission shaft 32 achieve the objectives of convenient assembly, disassembly and repair. The insulating coating 40 is coated on outer surfaces of the head 2, the rear-cover support 382, the rear-cover button 383 and the head tail cover 34, forming an insulating protection film on the surfaces by using the nonconductive property of materials such as alumina, Teflon, ceramic paint, resin, and diamond-like carbon (DLC), thereby achieving the insulation effect. In this way, the curved handpiece for dental root canal treatment 100 forms an overall scheme of a dental curved handpiece, which is internally conductive, surface insulated, compact in structure, small in height and size and convenient to repair for the first time in the industry. A dental root canal length measuring function can be realized accurately, safely and stably, and a stable two-in-one function of combining root canal preparation and dental root canal length measurement is further realized. The structure is compact as a whole, and a good visual field is provided. The risk of instrument separation or preparation step generation in the operation process of doctors is reduced, and the safety improvement is greatly guaranteed. According to the scheme, it is convenient to disassemble, repair and clean, the risk of cross infection is reduced, and the use safety and convenience effects of the present invention are further improved. The curved handpiece has great market benefits.

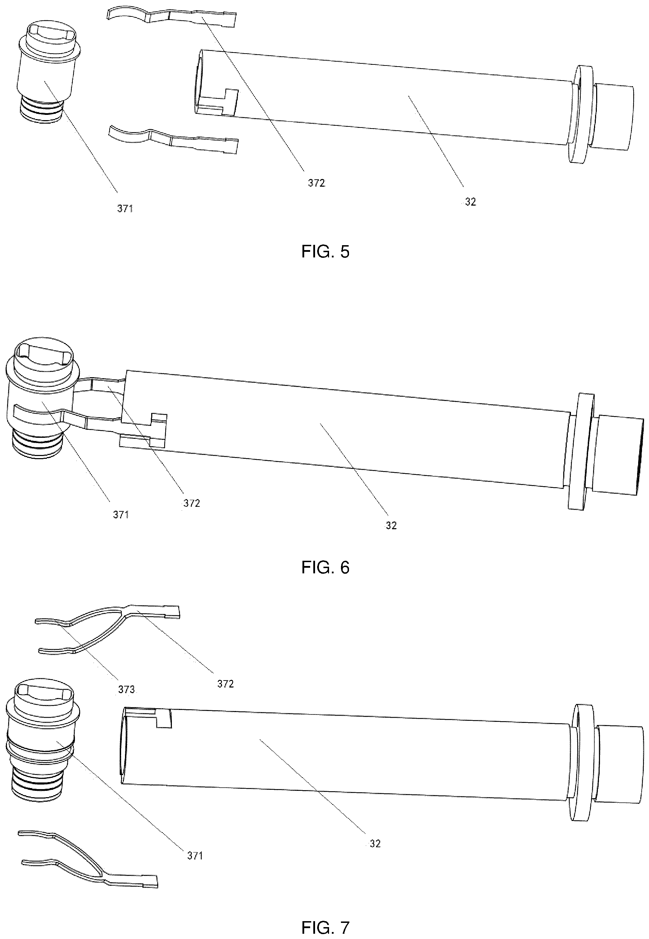

Further, referring to FIGS. 5 to 8, one or more conductive elastic pieces 372 are provided, each surrounding the entire first-stage transmission shaft 32.

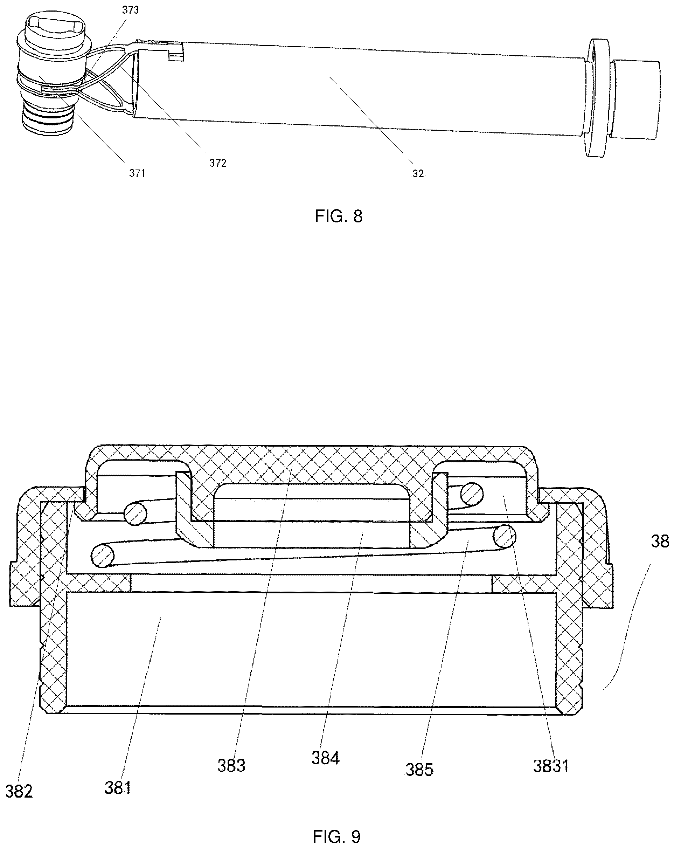

Further, referring to FIGS. 7 and 8, the elastic conductive device 37 further includes a limiting clamp 373. The limiting clamp 373 is fixedly connected to the conductive elastic piece 372, abuts against the axle 371, and is disposed on one side of the conductive elastic piece 372 proximate to the axle 371.

In this embodiment, two conductive elastic pieces 372 may be provided symmetrical to each other up and down or left and right, or one single conductive elastic piece may be provided. By increasing the number of the conductive elastic pieces 372, the limiting clamp 373 can clamp both sides of the periphery of the axle 371, improving the stability of electrical conduction.

Further, the rear-cover bearing holder 381, the rear-cover support 382, and the rear-cover button 383 are made of an insulating material.

In this embodiment, the rear-cover bearing holder 381, the rear-cover support 382, and the rear-cover button 383 may not necessarily be made of an insulating material, and may be made of an insulating material or coated with an insulating coating on the surface, as long as the internal conductive part can be separated and insulated from the outside of the curved handpiece. At present, the insulating material is a relatively economical and feasible solution.

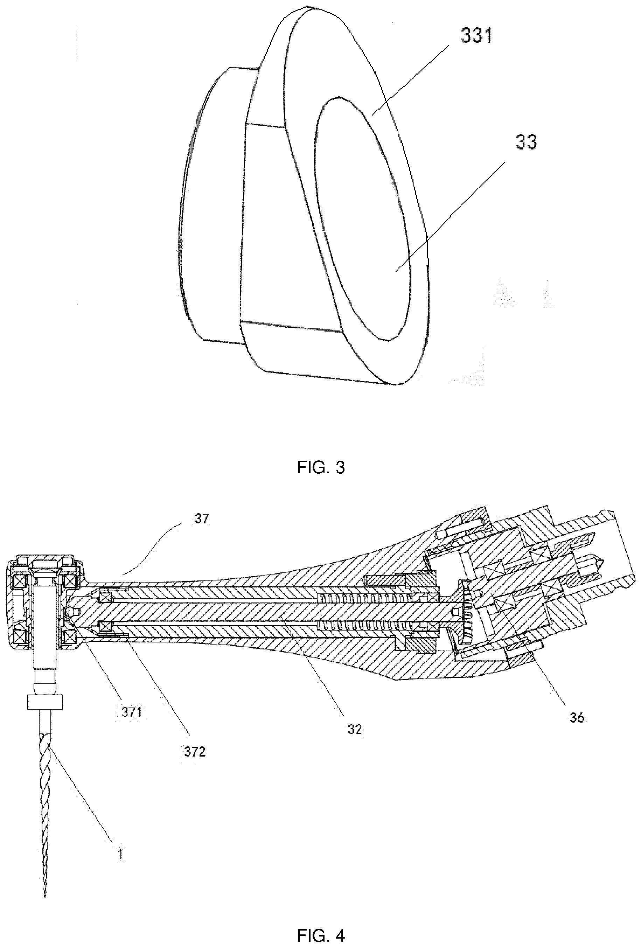

Further, referring to FIG. 3, the urging chamfered block 33 has a bevel 331. The bevel 331 is disposed on one side of the urging chamfered block 33 proximate to the input gearbox cover 35.

Further, referring to FIG. 1, the detachable device 4 further includes a screw 39. The screw 39 is detachably connected to the head tail cover 34, is detachably connected to the input gearbox cover 35, and is disposed between the head tail cover 34 and the input gearbox cover 35.

In this embodiment, an end face of the input gearbox cover 35 is pressed against the bevel of the urging chamfered block 33. After the urging chamfered block 33 is fixed by urging, the screw 39 is screwed into a threaded hole on the head tail cover 34 to fix the input gearbox cover 35.

Described above is merely a preferred embodiment of the present invention, and certainly is not intended to limit the scope of rights of the present invention. Those of ordinary skill in the art can understand that the implementation of all or part of the processes of the above-mentioned embodiments and equivalent changes made based on the claims of the present invention all fall within the scope of the present invention.

## Claims

1. A curved handpiece for dental root canal treatment, comprising a head and a rear cover device, wherein a surface of the curved handpiece for dental root canal treatment is provided with an insulating coating;
the rear cover device is detachably connected to the head and is disposed on one side of the head; and
the insulating coating is coated on the surface of the curved handpiece for dental root canal treatment; and a material of the insulating coating is alumina or Teflon or ceramic paint or resin or diamond-like carbon.

2. The curved handpiece for dental root canal treatment according to claim 1, wherein the curved handpiece for dental root canal treatment further comprises a detachable device and an elastic conductive device, wherein the detachable device is detachably connected to the head, and the elastic conductive device is detachably connected to the head and is disposed on one side of the head.

3. The curved handpiece for dental root canal treatment according to claim 1, wherein the rear cover device comprises a rear-cover bearing holder, a rear-cover button, a spreader ring, a spring and a rear-cover support, wherein the rear-cover bearing holder is fixedly connected to the head and is disposed on one side of the head; the rear-cover button is slidably connected to the rear-cover support, is disposed inside the rear-cover support, and partially protrudes out of the rear-cover support; the spreader ring is fixedly connected to the rear-cover button and is disposed on one side of the rear-cover button; one end of the spring abuts against the rear-cover button and the other end abuts against the rear-cover bearing holder, and the spring is disposed between the rear-cover bearing holder and the rear-cover button; and the rear-cover support is clamped with the rear-cover bearing holder, is slidably connected to the rear-cover button, and is disposed on one side of the rear-cover bearing holder proximate to the rear-cover button.

4. The curved handpiece for dental root canal treatment according to claim 2, wherein the detachable device comprises a movement, a first-stage transmission shaft, an urging chamfered block, an input gearbox cover, a second-stage transmission shaft and a head tail cover, wherein the movement is rotatably connected to the head and is disposed on one side of the head; the first-stage transmission shaft is fixedly connected to the head, and one end of the first-stage transmission shaft is engaged with the movement for transmission and is disposed inside the head; the urging chamfered block abuts against the first-stage transmission shaft, is sleeved over a periphery of the first-stage transmission shaft, and is disposed at one end of the first-stage transmission shaft distal from the movement; the input gearbox cover abuts against the urging chamfered block, is detachably connected to the head tail cover, and is disposed on one side of the head tail cover distal from the head; the second-stage transmission shaft is rotatably connected to the input gearbox cover, is engaged with the first-stage transmission shaft, and is disposed inside the input gearbox cover; and the head tail cover is detachably connected to the head and is disposed on one side of the head distal from the movement.

5. The curved handpiece for dental root canal treatment according to claim 4, wherein the elastic conductive device comprises an axle and a conductive elastic piece, wherein the axle is rotatably connected to the movement and is disposed inside the movement, one end of the conductive elastic piece elastically abuts against the axle, and the other end is fixedly connected to the first-stage transmission shaft, and the conductive elastic piece is disposed between the first-stage transmission shaft and the axle.

6. The curved handpiece for dental root canal treatment according to claim 5, wherein one or more conductive elastic pieces are provided, each surrounding the entire first-stage transmission shaft.

7. The curved handpiece for dental root canal treatment according to claim 3, wherein the rear-cover bearing holder, the rear-cover support, and the rear-cover button are made of an insulating material.

8. The curved handpiece for dental root canal treatment according to claim 4, wherein the urging chamfered block has a bevel, wherein the bevel is disposed on one side of the urging chamfered block proximate to the input gearbox cover.

9. The curved handpiece for dental root canal treatment according to claim 4, wherein the detachable device further comprises a screw, wherein the screw is detachably connected to the head tail cover, is detachably connected to the input gearbox cover, and is disposed between the head tail cover and the input gearbox cover.

10. The curved handpiece for dental root canal treatment according to claim 5, wherein the elastic conductive device further comprises a limiting clamp, wherein the limiting clamp is fixedly connected to the conductive elastic piece, abuts against the axle, and is disposed on one side of the conductive elastic piece proximate to the axle.
